# EUROPEAN PATENT SPECIFICATION

(11) **EP 2 446 750 B1**
(45) Date of publication and mention of the grant of the patent: **09.01.2013**
(21) Application number: 11156126.2
(22) Date of filing: 28.02.2011
(51) Int. Cl.: A23G 9/00

(54) **Machine for dispensing cold or iced drinks**
Maschine zum Ausgeben von kalte oder gefrorene Getränke
Distributeur de boissons froides ou glacées

(30) Priority: 28.10.2010 IT BO20100650
(43) Date of publication of application: 02.05.2012
(73) Proprietor: ALI S.p.A. Divisione GBG, 20123 Milano (IT)
(72) Inventor: Cocchi, Andrea, 40012, CALDERARA DI RENO (Bologna) (IT); Escriva Estruch, Vicente, GANDIA (Valencia) (ES); Bassi, Davide, 40138, BOLOGNA (IT)
(74) Representative: Bianciardi, Ezio

(56) References cited:
- EP-A1- 2 062 481
- US-A- 6 082 123
- US-A1- 2005 229 622
- US-B1- 6 370 892

## Description

This invention relates to a machine for dispensing cold or iced drinks such as cool drinks, granitas and slush drinks.

Machines of this kind generally comprise a transparent tank, in which a fluid is mixed and chilled and eventually dispensed in the form of a cool drink, granita or slush drink through a tap mounted near the bottom of the tank.

The tank is closed at the top by a removable lid and contains at the bottom of it a screw type stirring element and an evaporator of a refrigerating circuit.

The evaporator is cylindrical in shape and is coaxially surrounded by the stirrer, which is rotationally driven about its axis by an electric motor through a reduction gear unit in order to mix the product inside the tank and preventing the separation of ingredients with different specific weights and to prevent the formation of an iced sleeve on the outside surface of the evaporator. More specifically, the evaporator is in the form of a hollow cylinder with a tubular side wall inside which is embedded a coil with a refrigerant flowing in it.

The tank is generally in the shape of a parallelepiped, with the exception of the bottom of it which is rounded in such a way as to partly surround the substantially cylindrical periphery of the stirrer-evaporator assembly and prevent the formation of zones of stagnant product.

This kind of machines are known, for example, from US 6370892, US 2005/229622, US 6082123 and from EP 2062481 in the name of the same applicant.

In the operation of these machines, the consistency of the product being processed must remain uniform and at an optimum level. In effect, the consistency value must not fall below the lower limit of acceptable quality for the product but at the same time must not exceed the upper limit where the stirrer would cause a motor overload.

For this purpose, the refrigerating circuit of these machines may not be controlled simply on the basis of the temperature of the product being processed. Indeed, the product consists of a mixture of water, sugar and additives maintained in a state of equilibrium between the liquid phase and the solid phase, and the consistency is a function of the relative percentage of the two phases. Since the change of state from the liquid phase to the solid phase occurs at a constant temperature, it is evidently impossible to check the state of equilibrium by measuring the temperature.

In the prior art, several systems are known for detecting the real consistency of the product being processed. Of these, the most widely used involves detecting the resistant torque acting on the stirrer.

For example, systems for detecting resistant torque are known where the gear motor is free to rotate in its entirety about the axis of its own shaft against the counteracting force of a spring. A sensor, for example a microswitch, is mounted near the gear motor to detect the degree of rotation of the motor and to disable the refrigerating circuit when the rotation of the whole gear motor exceeds a set value. The spring is calibrated in such a way that the microswitch is activated when the resistance encountered by the stirrer is higher than a predetermined limit, corresponding to the reference consistency of the product. Thus, when the consistency of the product exceeds the predetermined reference value, the resistant torque acting on the gear motor causes the entire gear motor to rotate against the opposing action of the spring and the refrigerating circuit is disabled by the microswitch until the consistency of the product returns to an acceptable value.

The system described above, although effective as a whole, is unable to prevent the formation of a thin layer of iced product round the periphery of the evaporator, that is to say, between the stirring screw and the evaporator cylinder, especially when the latter is not completely immersed in the product being processed.

That is because, on the one hand, under equal conditions of consistency of the product being processed inside the tank, the value of the resistant torque acting on the gear motor varies with the variation of the quantity of the product itself and, on the other hand, because the heat exchange through the outside surface of the evaporator varies according to whether or not that surface is in direct contact with the product being processed.

It should also be noted that the iced layer, because it is very thin, is not removed by the stirring screw, since there is a minimum of clearance between the screw and the lateral surface of the evaporator cylinder as the screw rotates. The iced layer, which forms mainly at the top of the evaporator cylinder, has a negative effect on the mixing efficiency of the machine and therefore on the quality of the product dispensed. In other words, the quality of the product dispensed varies with the variation of the amount of product being processed inside the tank.

For example, in the cold drink mode, that is to say, if the product being dispensed is a more or less thick cold drink, the iced layer may be formed when the product in the tank falls to a level such that the product does not cover the upper part of the evaporator cylinder. The iced layer may then flake off the evaporator cylinder causing ice fragments to fall into and mix with the drink being dispensed, making the drink less enticing for consumers.

Obviously, even if the product dispensed is a granita or slush drink, pieces of ice, whether small or large, that fall away from the iced layer, have a negative effect on the quality of the product dispensed. In effect, such ice fragments mix with the product and give it a non-uniform consistency and colour.

It is also obvious that simply controlling the temperature of the product being processed, for example near the dispensing tap where product is always present, is not sufficient to overcome the problem outlined above.

The problem is the same even in multiple tank dispensing machines, that is to say, generic machines of the type described above where a single frame mounts two or more tanks, each used to dispense a different product.

Generally speaking, the evaporators in the tanks of these machines are connected to each other in parallel and are driven by a single compressor through controlled solenoid valves. When the product in a certain tank reaches the required consistency, the corresponding solenoid valve is closed so as to exclude the evaporator of that tank from the refrigerating circuit. When all the solenoid valves are closed, the compressor is switched off and is restarted as soon as one of the solenoid valves opens again.

It is clear, therefore, that the above considerations regarding the formation of a thin layer of ice round the periphery of the evaporator apply in this case, too.

The aim of this invention is to provide a machine for dispensing cold or iced drinks such as cool drinks, granitas or slush drinks, which is free of the above mentioned drawback and which is therefore able to dispense drinks of constant quality at all times.

Another aim of the invention is to provide a machine for dispensing cold or iced drinks such as cool drinks, granitas or slush drinks, which can alert the operator when the level of the product in the tank falls below a predetermined limit.

In the context of these aims, it is also a purpose of the invention to provide a technical solution that is at once simple, effective, economical and practical to implement, even on existing machines. This invention accordingly provides a machine for dispensing cold or iced drinks such as cool drinks, granitas or slush drinks and which comprises the features defined in any of the appended claims.

The invention will now be described by way of a non-limiting example with reference to the accompanying drawings, in which:
Figure 1 is a perspective view of a machine made according to this invention;
Figure 2 is a longitudinal cross section of a portion of the machine of Figure 1;
Figure 3 is an enlarged detail view of Figure 2;
Figure 4 shows another embodiment of the detail of Figure 3;
Figures 5 and 6 are block diagrams schematically representing two different configurations of the machine of Figure 1;
Figure 7 shows a further embodiment of the detail of Figure 3.

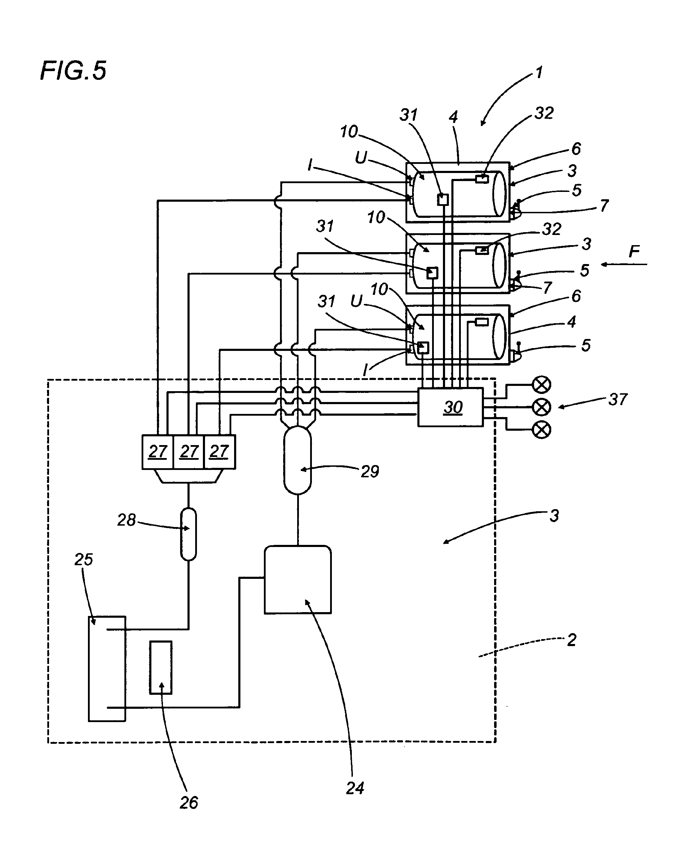

With reference to the accompanying drawings, the reference numeral 1 denotes in its entirety a machine for dispensing cold or iced drinks such as cool drinks, granitas or slush drinks. The machine 1 comprises a frame which forms a base 2 containing part of a refrigerating circuit 3 shown schematically in Figure 5.

Mounted on the base 2 is at least one transparent containment tank 4 in which a fluid is processed, or more specifically, mixed and chilled, and eventually dispensed in the form of a cold or iced drink through a respective tap 5 mounted at the front F of the machine 1, near the bottom of the tank 4 itself.

More specifically, the tank 4 has a front wall 6 which is equipped at the bottom of it with a nozzle 7 for dispensing the drink and connected to the tap 5.

In the example shown, the machine 1 comprises three tanks 4, mounted side by side on top of the base 2. However, in different embodiments not illustrated but easily inferable from the description below, there may be n tanks 4, where n is a whole number greater than or equal to 1.

The tanks, when more than one in number, can each dispense a different type of drink.

Each tank 4 is closed at the top by a removable lid 8 and contains, at the bottom of it, a screw type stirring element 9 and an evaporator 10, the latter forming part of the above mentioned refrigerating circuit 3.

Each tank 4 is substantially in the shape of a parallelepiped, with the exception of the bottom of it, which is rounded in such a way as to partly surround the substantially cylindrical periphery of the stirrer-evaporator assembly, thereby preventing the formation of zones of stagnant product. More specifically, the evaporator 10 is substantially cylindrical in shape and is hollow inside. More in detail, the evaporator 10 has a substantially cylindrical tubular wall 11 which is closed at the front by a circular wall 12.

The front wall 12 of the evaporator 10 is positioned to face the front wall 6 of the tank 4.

The evaporator 10 is positioned at the bottom of the tank 4 with a bottom front portion of it 13 positioned near the nozzle 7 for dispensing the drink. More in detail, the bottom front portion 13 is defined by the bottom end of the circular wall 12.

The tubular wall 11 extends around a central, horizontally or substantially horizontally disposed, longitudinal axis 14.

A cooling coil 15, forming part of the above mentioned refrigerating circuit 3, extends helically around the axis 14 on the inside of the wall 11.

The walls 11 and 12 externally delimit the evaporator 10 and form a cooling wall of it for cooling the product being processed.

The coil 15 is therefore built into the cooling wall, that is to say, it is built into the wall 11. The walls 11 and 12 also form a substantially cylindrical cavity 16 inside the evaporator 10.

The wall 11 is coaxially surrounded by the stirring element 9, which is rotationally driven about its axis, that is, about the axis 14, by a drive unit 17 to stir the product inside the tank 4 and to prevent the formation of a sleeve of iced product on the outside surface of the wall 11.

The drive unit 17 comprises a gear motor 18 of known type, housed at the back and bottom part of the machine 1.

The drive unite 17 also comprises drive transmission means 19 interposed between the gear motor 18 and the stirring element 9.

The drive transmission means 19 comprise a cylindrical shaft 20 which extends longitudinally along the axis 14 inside the cavity 16 and, with one end of it 21 which drives the stirring element 9, sealingly protrudes from the wall 12.

Around the end 21 there is an annular seal 22 interposed between the wall 12 and a housing 23 of the stirring element 6 in which the end 21 is inserted and locked.

That way, the product being processed in the tank 4 is prevented from penetrating into the cavity 16. Inside the coil 15 flows a refrigerant liquid which is made to circulate in the refrigerating circuit 3 by a compressor 24 housed in the base 2.

Although the machine 1 comprises a single compressor 24 for all the coils 15, in a different embodiment of it, the machine 1 might have, for each tank 4, a separate refrigerating circuit 3 completely independent of the others.

As illustrated in Figure 5, the compressor 24 is connected in known manner to a condenser 25 which is equipped with a forced ventilation unit 26 of its own.

The coils 15 of the respective evaporators 10 are connected to each other in parallel and the respective inlets I are connected to the condenser 25 through respective controlled solenoid valves 27.

The refrigerating circuit 3 also comprises a filter 28, which is interposed between the condenser 25 and the solenoid valves 27, and a volume accumulator 29, which is interposed between the outlets U of all the coils 15 and the compressor 24.

For controlling the solenoid valves 27, the machine 1 comprises a control unit 30 and, in each tank 4, detection means 31, connected to the control unit 30, for detecting the consistency of the product being processed.

According to known methods, the detection means 31 may comprise temperature sensors in thermal contact with the product being processed and/or torque sensors connected to the respective gear motor 18. When the product in a certain tank 4 reaches the required consistency, the corresponding solenoid valve 27 is closed so as to exclude the evaporator 10 of that tank from the refrigerating circuit 3. When all the solenoid valves 27 are closed, the compressor 24 may be switched off and then restarted as soon as one of the solenoid valves 27 opens again, or it may remain on but with the valves closed, so that it continues to operate but the gas does not circulate.

If the machine 1 comprises a single tank 4, the control unit 30 may drive the compressor 24 directly on the basis of the signal from the detection means 31 present in the tank 4 itself, or it may open or close the solenoid valve 27. In this case, too, therefore, the compressor may continue to operate or be switched off and switched on as required.

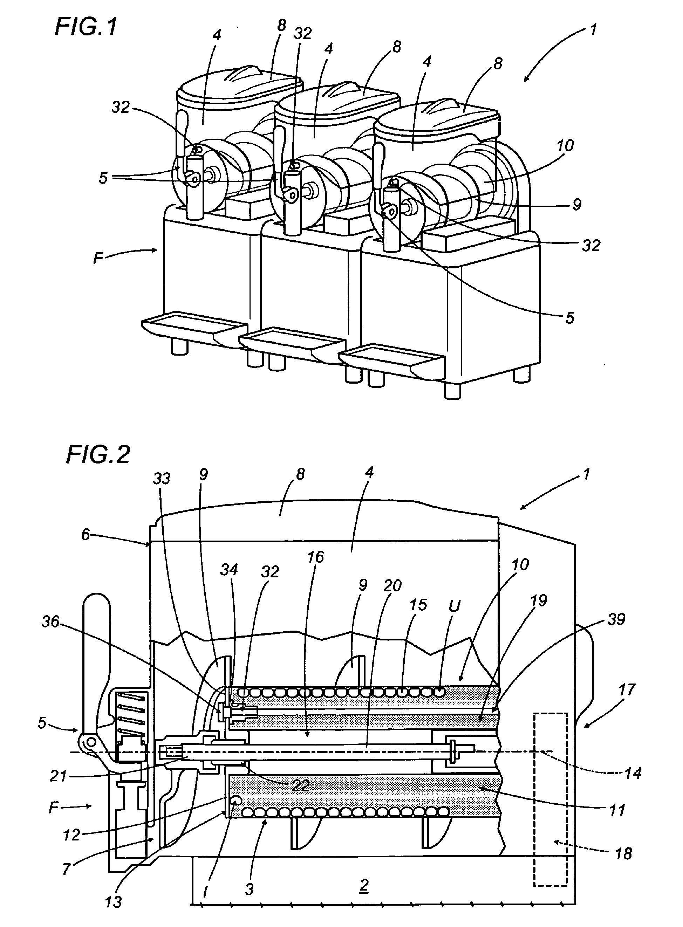

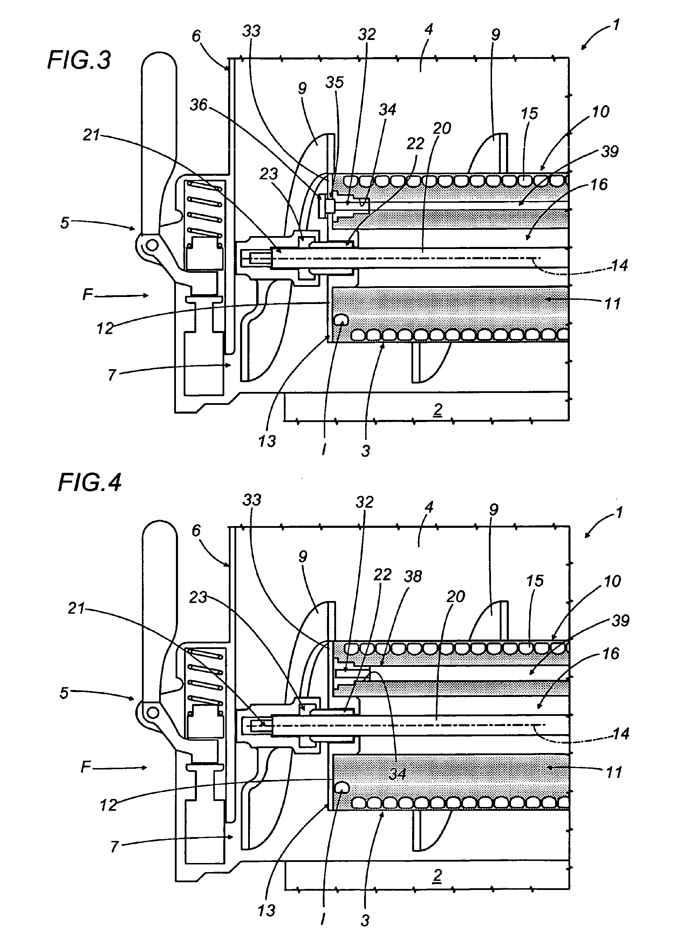

The machine 1 also comprises measuring means for measuring the temperature of the evaporators 10. For each evaporator 10, the measuring means comprise a temperature probe 32 associated with the top front portion 33 of the evaporator 10 itself. As better illustrated in Figures 2 and 3, the portion 33 is located at a position diametrically opposite the portion 13, that is, it is defined by the top end of the wall 12 and at the top front end of the wall 11.

The probe 32 is housed inside a housing 34 in the cooling wall of the evaporator 10. More precisely, the housing 34 is formed longitudinally, or welded, in the tubular side wall 11 of the evaporator 10 and has a front inlet opening 35 made in the wall 12.

The front inlet opening 35 is closed, through a sealing gasket, by a removable plug 36. More specifically, the plug 36 is of the screw type.

The plug 36 is thermally insulating. More specifically, the plug 36 is made of plastic material.

The function of the plug 36 is to prevent the probe 32 from coming into contact with the product being processed.

The probe 32 is located close to the coil 15; more specifically, it is located close to the inlet spiral of the coil 15, that is to say, the coldest spiral.

In other words, each temperature probe 32 is located inside the respective evaporator 10 in the coldest zone of the latter and is insulated by the product being processed.

More precisely, the probe 32 is substantially in contact with the top front portion 33 of the circular wall 12 of the evaporator.

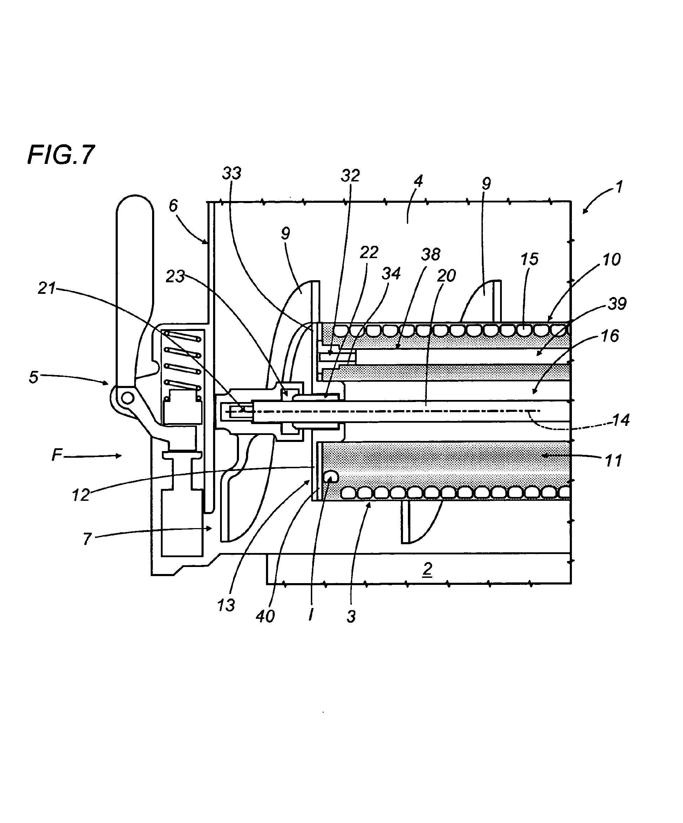

Also, as illustrated in Figure 7, the circular wall 12 is equipped with a layer of thermally insulating material, labelled 40.

The layer of insulating material comprises a disc 40 interposed between the coil 15 and the circular wall 12 of the evaporator 10.

This solution keeps the coil 15 clear and isolated from the front circular wall of the evaporator. Consequently, the temperature reading, taken by the temperature probe 32, of the portion 33 of the cylindrical wall 12 is more stable and does not jump, as it would otherwise do, between very different values during the power up and power down transients of the refrigerating circuit 3.

During operation of the machine 1, when the temperature measured by a probe 32 varies by a quantity above or below a predetermined limit value, the control unit 30 activates a respective optical and/or acoustic warning device 37 connected to the control unit 30 itself (Figure 5).

For example, the device 37 might consist of a warning light or a buzzer.

For each tank 4 there is an independent optical and/or acoustic warning device 37.

More specifically, with the machine 1 in cold drink mode, when the zone of a tank 4 where the probe 32 of that tank is located is covered by the product being processed, the temperature measured corresponds to the temperature set point for cold drink mode set on the electronic card of the control unit 30. Thus, the evaporator 10 of that tank 4 remains on and the respective warning device 37 does not emit any signal.

When the zone where the probe 32 is located is uncovered by the product, the temperature measured differs from the temperature set point for cold drink mode set on the electronic card of the control unit 30. Thus, the evaporator 10 of that tank 4 remains on but the respective warning device 37 emits a signal to alert the operator that the level of product in the tank 4 is too low. Alternatively or simultaneously, according to two further operating modes, if the probe 32 measures a temperature value lower than a predetermined limit value at which an iced layer can form around the wall 11, the control unit 30 might cause the corresponding solenoid valve 27 to close. More in general, the control unit 30 might turn the circulation of refrigerant fluid through each evaporator 10 on or off based on the signals from the respective probes 32.

In other words, the probes 32 may be used for controlling the level of the respective tanks 4, alerting the operator when necessary, or for controlling the temperatures of the evaporators 10, or for controlling both.

If the machine 1 comprises a single tank 4, the control unit 30 may drive the compressor 24 directly on the basis of the signal from the probe 32. In other words, it may open or close the solenoid valve 27, thereby stopping or not stopping the compressor.

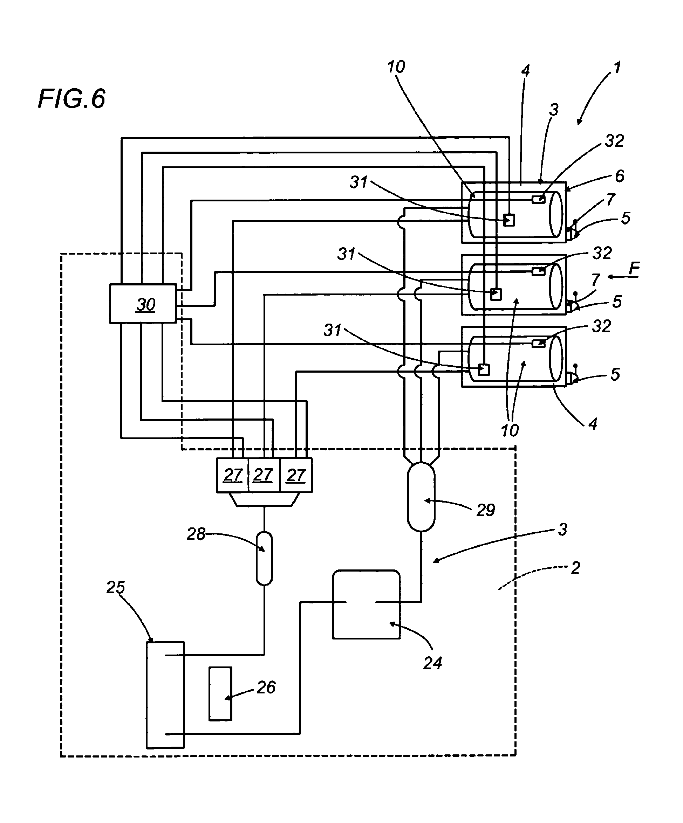

Figure 6 schematically illustrates an embodiment of the machine 1 where the optical and/or acoustic warning devices 37 are not provided. In this case, the probes 32 are used to control the temperatures of the evaporators 10.

According to the embodiment of Figure 4, the housing 34 is closed at the front and has a rear inlet opening 38 accessible from the rear portion of the evaporator 10 through a duct 39 formed longitudinally along the wall 11.

The invention described above may be modified and adapted in several ways without thereby departing from the scope of the inventive concept. Moreover, all details of the invention may be substituted by technically equivalent elements.

## Claims

1. A machine for dispensing cold or iced drinks, such as cool drinks, granitas or slush drinks, comprising at least one tank (4) for containing and processing the product to be dispensed; the tank (4) having a front wall (6) which is equipped at the bottom of it with a nozzle (7) for dispensing the drink and containing inside it an evaporator (10) of a refrigerating circuit (3); the evaporator (10) being located at the bottom of the tank (4) with a bottom front portion of it (13) positioned near the nozzle (7) for dispensing the drink; the machine (1) being **characterized in that** it comprises measuring means for measuring the temperature of the evaporator (10); the measuring means comprising a temperature probe (32) associated with the top front portion (33) of the evaporator (10).

2. The machine according to claim 1, **characterized in that** the evaporator (10) is externally delimited by a cooling wall (11, 12) which cools the product being processed and inside which a refrigerant liquid flows; the probe (32) being housed inside a housing (34) in the wall (11, 12).

3. The machine according to claim 2, **characterized in that** the cooling wall (11, 12) has a built-in coil (15) inside which the refrigerant liquid flows; the probe (32) being positioned close to the coil (15).

4. The machine according to claim 3, **characterized in that** the cooling wall (11, 12) comprises a tubular side portion (11) and a front portion (12), which delimit a cavity (16) inside the evaporator (10); the coil (15) and the probe (32) being built into the tubular side portion (11).

5. The machine according to claim 4, **characterized in that** the housing (34) has a front inlet opening (35) made in the front portion (12) of the cooling wall.

6. The machine according to claim 5, **characterized in that** the front inlet opening (35) is closed by a removable plug (36).

7. The machine according to claim 4, **characterized in that** the housing (34) has a rear inlet opening (38) accessible from the rear portion of the evaporator (10) through a duct (39) formed longitudinally along the tubular side portion (11) of the cooling wall.

8. The machine according to any of the claims from 1 to 7, **characterized in that** it comprises a control unit (30) and actuating means (24; 27) for turning on or off the circulation of refrigerant fluid inside the evaporator (10); the actuating means (24; 27) being controlled by the control unit (30) based on the signal emitted by the measuring means which measure the temperature of the evaporator (10).

9. The machine according to any of the claims from 1 to 8, **characterized in that** it comprises a control unit (30) and optical and/or acoustical warning means (37) to alert the operator when the level in the tank (4) is down to a minimum safety limit; the warning means (37) being controlled by the control unit (30) based on the signal emitted by the measuring means which measure the temperature of the evaporator (10).

10. The machine according to any of the claims from 1 to 9, comprising at least two tanks (4) mounted on a single frame (2), each making and dispensing a respective product, a control unit (30) and a single compressor (24) to which the evaporators (10) of the tanks (4), coupled to each other in parallel, are connected through respective on/off solenoid valves (27); each solenoid valve (27) being controlled by the control unit (30) based on the signal emitted by the measuring means which measure the temperature of the evaporator (10).

11. The machine according to any of the claims from 1 to 10, **characterized in that** the temperature probe (32) is substantially in contact with the top front portion (33) of the circular wall (12) of the evaporator.

12. The machine according to any of the claims from 1 to 11, **characterized in that** the circular wall (12) is equipped with a layer of thermally insulating material (40).

13. The machine according to claim 12, **characterized in that** the layer of insulating material comprises a disc (40) interposed between the coil (15) and the circular wall (12) of the evaporator (10).

## Patentansprüche

1. Maschine zum Ausgeben von kalten oder gefrorenen Getränken, wie Kaltgetränke, Granitas oder Sorbets, umfassend mindestens einen Behälter (4) zum Enthalten und zur Verarbeitung des auszugebenden Produkts, wobei der Behälter (4) eine Stirnwand (6) aufweist, die unten mit einer Düse (7) zum Ausgeben des Getränks ausgestattet ist und in seinem Inneren einen Verdampfer (10) eines Kühlkreises (3) enthält, wobei sich der Verdampfer (10) am unteren Teil des Behälters (4) mit einem seiner unteren Stirnabschnitte (13) in der Nähe der Düse (7) zum Ausgeben des Getränks positioniert befindet, wobei die Maschine (1) **dadurch gekennzeichnet ist, dass** sie Messmittel zum Messen der Temperatur des Verdampfers (10) umfasst, wobei die Messmittel eine Temperatursonde (32) umfassen, die an den oberen Stirnabschnitt (33) des Verdampfers (10) anschließt.

2. Maschine nach Anspruch 1, **dadurch gekennzeichnet, dass** der Verdampfer (10) außen von einer Kühlwand (11, 12) begrenzt wird, die das zu verarbeitende Produkt kühlt und in der ein flüssiges Kältemittel fließt, wobei die Sonde (32) in einer Aufnahme (34) in der Wand (11, 12) aufgenommen ist.

3. Maschine nach Anspruch 2, **dadurch gekennzeichnet, dass** die Kühlwand (11, 12) eine integrierte Schlange (15) aufweist, in der das flüssige Kältemittel fließt, wobei die Sonde (32) in der Nähe der Schlange (15) positioniert ist.

4. Maschine nach Anspruch 3, **dadurch gekennzeichnet, dass** die Kühlwand (11, 12) einen rohrförmigen Seitenabschnitt (11) und einen Stirnabschnitt (12) umfasst, die einen Hohlraum (16) innerhalb des Verdampfers (10) begrenzen, wobei die Schlange (15) und die Sonde (32) in den rohrförmigen Seitenabschnitt (11) integriert sind.

5. Maschine nach Anspruch 4, **dadurch gekennzeichnet, dass** die Aufnahme (34) eine vordere Einlassöffnung (35) aufweist, die im Stirnabschnitt (12) der Kühlwand ausgebildet ist.

6. Maschine nach Anspruch 5, **dadurch gekennzeichnet, dass** die vordere Einlassöffnung (35) von einem abnehmbaren Stopfen (36) verschlossen wird.

7. Maschine nach Anspruch 4, **dadurch gekennzeichnet, dass** die Aufnahme (34) eine hintere Einlassöffnung (38) aufweist, die vom hinteren Abschnitt des Verdampfers (10) durch eine Leitung (39) zugänglich ist, welche longitudinal entlang dem rohrförmigen Seitenabschnitt (11) der Kühlwand ausgebildet ist.

8. Maschine nach einem der Ansprüche 1 bis 7, **dadurch gekennzeichnet, dass** sie eine Steuereinheit (30) und Betätigungsmittel (24; 27) zum Ein- oder Ausschalten der Zirkulation des Kältefluids im Verdampfer (10) umfasst, wobei die Betätigungsmittel (24; 27) von der Steuereinheit (30) auf der Basis des Signals gesteuert werden, das von den die Temperatur des Verdampfers (10) messenden Messmitteln ausgegeben wird.

9. Maschine nach einem der Ansprüche 1 bis 8, **dadurch gekennzeichnet, dass** sie eine Steuereinheit (30) und optische und/oder akustische Warnmittel (37) zum Alarmieren des Bedieners umfassen, wenn der Stand im Behälter (4) eine Mindestsicherheitsgrenze erreicht hat, wobei die Warnmittel (37) von der Steuereinheit (30) auf der Basis des Signals gesteuert werden, das von den die Temperatur des Verdampfers (10) messenden Messmitteln ausgegeben wird.

10. Maschine nach einem der Ansprüche 1 bis 9, umfassend mindestens zwei Behälter (4), die auf einem einzelnen Gestell (2) montiert sind, von denen jeder ein entsprechendes Produkt herstellt und ausgibt, eine Steuereinheit (30) und einen einzelnen Kompressor (24), mit dem die Verdampfer (10) der parallel zueinander verkoppelten Behälter (4) durch entsprechende Abschalt-Magnetventile (27) verbunden sind, wobei jedes Magnetventil (27) von der Steuereinheit (30) auf der Basis des Signals gesteuert wird, das von den die Temperatur des Verdampfers (10) messenden Messmitteln ausgegeben wird.

11. Maschine nach einem der Ansprüche 1 bis 10, **dadurch gekennzeichnet, dass** die Temperatursonde (32) im Wesentlichen am oberen Stirnabschnitt (33) der kreisrunden Wand (12) des Verdampfers anliegt.

12. Maschine nach einem der Ansprüche 1 bis 11, **dadurch gekennzeichnet, dass** die kreisrunde Wand (12) mit einer Schicht wärmedämmenden Materials (40) ausgestattet ist.

13. Maschine nach Anspruch 12, **dadurch gekennzeichnet, dass** die Schicht wärmedämmenden Materials zwischen der Schlange (15) und der kreisrunden Wand (12) des Verdampfers (10) eine Scheibe (40) umfasst.

## Revendications

1. Distributeur de boissons froides ou glacées, telles que des boissons fraîches, des granités ou des sorbets, comprenant au moins un réservoir (4) pour contenir et transformer le produit à distribuer ; le réservoir (4) comportant une paroi antérieure (6) qui est pourvue dans sa partie inférieure d'une buse (7) pour distribuer la boisson et contenant en son sein un évaporateur (10) d'un circuit frigorifique (3) ; l'évaporateur (10) étant situé au fond du réservoir (4) dont une partie antérieure inférieure (13) est positionnée près de la buse (7) pour distribuer la boisson ; le distributeur (1) étant **caractérisé en ce qu'**il comprend des moyens de mesure pour mesurer la température de l'évaporateur (10) ; les moyens de mesure comprenant une sonde de température (32) associée à la partie antérieure supérieure (33) de l'évaporateur (10).

2. Distributeur selon la revendication 1, **caractérisé en ce que** l'évaporateur (10) est délimité à l'extérieur par une paroi de refroidissement (11, 12) qui refroidit le produit en cours de transformation et à l'intérieur de laquelle un liquide réfrigérant s'écoule ; la sonde (32) étant logée à l'intérieur d'un logement (34) situé dans la paroi (11, 12).

3. Distributeur selon la revendication 2, **caractérisé en ce que** la paroi de refroidissement (11, 12) possède un serpentin encastré (15) à l'intérieur duquel le liquide réfrigérant s'écoule ; la sonde (32) étant positionnée près du serpentin (15).

4. Distributeur selon la revendication 3, **caractérisé en ce que** la paroi de refroidissement (11, 12) comprend une partie latérale tubulaire (11) et une partie antérieure (12), qui délimitent une cavité (16) à l'intérieur de l'évaporateur (10) ; le serpentin (15) et la sonde (32) étant encastrés dans la partie latérale tubulaire (11).

5. Distributeur selon la revendication 4, **caractérisé en ce que** le logement (34) possède une ouverture d'entrée antérieure (35) réalisée dans la partie antérieure (12) de la paroi de refroidissement.

6. Distributeur selon la revendication 5, **caractérisé en ce que** l'ouverture d'entrée antérieure (35) est fermée par un bouchon amovible (36).

7. Distributeur selon la revendication 4, **caractérisé en ce que** le logement (34) possède une ouverture d'entrée postérieure (38) accessible à partir de la partie postérieure de l'évaporateur (10) à travers un conduit (39) formé longitudinalement le long de la partie latérale tubulaire (11) de la paroi de refroidissement.

8. Distributeur selon l'une quelconque des revendications de 1 à 7, **caractérisé en ce qu'**il comprend une unité de commande (30) et des moyens d'actionnement (24 ; 27) pour activer ou désactiver la circulation du liquide réfrigérant à l'intérieur de l'évaporateur (10) ; les moyens d'actionnement (24 ; 27) étant contrôlés par l'unité de commande (30) sur la base du signal émis par les moyens de mesure mesurant la température de l'évaporateur (10).

9. Distributeur selon l'une quelconque des revendications de 1 à 8, **caractérisé en ce qu'**il comprend une unité de commande (30) et des moyens de signalisation optiques et/ou acoustiques (37) pour alerter l'opérateur lorsque le niveau dans le réservoir (4) est situé en dessous d'un seuil de sécurité minimum ; les moyens de signalisation (37) étant commandés par une unité de commande (30) selon le signal émis par les moyens de mesure mesurant la température de l'évaporateur (10).

10. Distributeur selon l'une quelconque des revendications de 1 à 9, comprenant au moins deux réservoirs (4) montés sur un châssis individuel (2), chacun fabricant et distribuant un produit respectif, une unité de commande (30) et un compresseur individuel (24) auquel les évaporateurs (10) des réservoirs (4), accouplés l'un à l'autre en parallèle, sont reliés par des électrovannes marche/arrêt respectives (27) ; chaque électrovanne (27) étant commandée par l'unité de commande (30) sur la base du signal émis par les moyens de mesure mesurant la température de l'évaporateur (10).

11. Distributeur selon l'une quelconque des revendications de 1 à 10, **caractérisé en ce que** la sonde de température (32) est substantiellement en contact avec la partie antérieure supérieure (33) de la paroi circulaire (12) de l'évaporateur.

12. Distributeur selon l'une quelconque des revendications de 1 à 11, **caractérisé en ce que** la paroi circulaire (12) est équipée d'une couche en matériau isolant contre la chaleur (40).

13. Distributeur selon la revendication 12, **caractérisé en ce que** la couche en matériau isolant comprend un disque (40) interposé entre le serpentin (15) et la paroi circulaire (12) de l'évaporateur (10).
